# EUROPÄISCHE PATENTSCHRIFT

(11) **EP 2 768 598 B1**
(45) Veröffentlichungstag und Bekanntmachung des Hinweises auf die Patenterteilung: **11.12.2019**
(21) Anmeldenummer: 12780148.8
(22) Anmeldetag: 16.10.2012
(51) Int. Cl.: B01D 46/00, B01D 53/26, B60T 17/00

(54) **LUFTFILTERPATRONE ZUR DRUCKLUFTAUFBEREITUNG FÜR EINE DRUCKLUFTAUFBEREITUNGSANLAGE**
AIR FILTER CARTRIDGE FOR COMPRESSED-AIR PREPARATION FOR A COMPRESSED-AIR PROCESSING INSTALLATION
CARTOUCHE DE FILTRE À AIR DESTINÉE AU TRAITEMENT D'AIR COMPRIMÉ POUR UN SYSTÈME DE TRAITEMENT D'AIR COMPRIMÉ

(30) Priorität: 20.10.2011 DE 102011116520
(43) Veröffentlichungstag der Anmeldung: 27.08.2014
(73) Patentinhaber: KNORR-BREMSE Systeme für Nutzfahrzeuge GmbH, 80809 München (DE)
(72) Erfinder: EIDENSCHINK, Rainer, 81927 München (DE); SCHAEBEL, Stefan, 80804 München (DE)
(86) Internationale Anmeldenummer: PCT/EP2012/070459
(87) Internationale Veröffentlichungsnummer: WO 2013/057088

(56) Entgegenhaltungen:
- DE-A1- 3 232 742
- DE-A1-102005 057 630
- DE-A1-102009 005 158
- GB-A- 2 103 954
- US-A- 4 713 094
- US-A1- 2007 144 350

## Beschreibung

Die vorliegende Erfindung betrifft eine Luftfilterpatrone zur Druckluftaufbereitung für eine Druckluftaufbereitungsanlage, insbesondere eine Druckluftaufbereitungsanlage eines Nutzfahrzeugs, umfassend einen mit einem Trockenmittel gefüllten Trockenmittelbehälter und einen Koaleszenzfilter, wobei das Trockenmittel während der Druckluftaufbereitung in einer axialen Erstreckungsrichtung des Trockenmittelbehälters durchströmt wird.

Fahrzeuge können über verschiedene druckluftverbrauchende Systeme verfügen. Beispielsweise können bei Lastkraftwagen die Betriebsbremsen druckluftbetätigt sein. Um eine dauerhafte Versorgung aller druckluftbetriebenen Systeme eines Fahrzeugs, insbesondere eines Nutzfahrzeugs, sicherstellen zu können, ist es bekannt, einen Druckluftkompressor, beispielsweise in Form eines Hubkolbenkompressors, vorzusehen, der von einem Antriebsmotor des Fahrzeugs angetrieben werden kann und der die zum Betrieb des Fahrzeugs notwendige Druckluft erzeugt. Da ein derartiger Kompressor die Druckluft durch das Ansaugen und Verdichten von Umgebungsluft erzeugt, enthält die von dem Kompressor bereitgestellte Druckluft einen hohen Anteil an Wasser in Form von Luftfeuchtigkeit. Weiterhin enthält die von dem Kompressor bereitgestellte Druckluft Schmutzpartikel, die bereits in der angesaugten Luft enthalten waren, sowie Öl- und Rußpartikel, die während des Verdichtungsprozesses durch den Kompressor in die Druckluft eingetragen werden. Die in der Druckluft enthaltene Luftfeuchtigkeit und die übrigen Schmutzpartikel können sich in den mit der Druckluft versorgten Systemen ablagern und deren Funktionsfähigkeit nachhaltig beeinträchtigen, wenn sie nicht von der erzeugten Druckluft getrennt werden. 1

Eine gattungsgemäße Luftfilterpatrone ist aus der GB 2103954 A bekannt.

Aus der DE 3232742 A1 ist weiterhin bekannt, einen ergänzenden Filter zusätzlich zu dem auf dem Trockenmittel liegenden vorzusehen.

Die vorliegende Erfindung stellt eine Luftfilterpatrone bereit.

Es ist bereits bekannt, zur Trennung der Druckluft von Öl- und Schmutzpartikeln und zu ihrer Trocknung Druckluftaufbereitungsanlagen in dem Fahrzeug vorzusehen, welche die von dem Kompressor bereitgestellte Druckluft entsprechend aufbereiten, das heißt von Öl- und Schmutzpartikeln befreien und trocknen. Um diese Druckluftaufbereitung gewährleisten zu können, werden in der Regel Luftfilterpatronen verwendet, die zunächst die Öl- und Schmutzpartikel von der Druckluft abtrennen und anschließend mit Hilfe eines Trockenmittels der Druckluft die Feuchtigkeit entziehen. Konstruktionsbedingt haben die verwendeten Luftfilterpatronen nur eine beschränkte Aufnahmekapazität für abgeschiedene Öl- und Schmutzpartikel und gesammelte Luftfeuchtigkeit, so dass ihre Lebensdauer begrenzt ist. Es sind verschiedene Möglichkeiten bekannt, um die Lebensdauer einer Luftfilterpatrone zu erhöhen. Beispielsweise kann durch eine Änderung des konstruktiven Aufbaus der Luftfilterpatrone die Aufnahmekapazität für die abzuscheidenden Stoffe erhöht werden. Eine andere Möglichkeit zur Steigerung der Lebensdauer einer Luftfilterpatrone besteht beispielsweise in dem Vorsehen zyklisch zu wiederholender Regenerationsphasen, während der in der Luftfilterpatrone zurückgehaltene Feuchtigkeit und abgeschiedene Öl- und Schmutzpartikel entfernt werden. Luftfilterpatronen, die für einen derartigen Regenerationsbetrieb geeignet sind, weisen einen komplexen Aufbau auf, so dass ihre Fertigung aufwändig ist.

Der vorliegenden Erfindung liegt daher die Aufgabe zugrunde, eine Luftfilterpatrone bereitzustellen, die einen fertigungstechnisch einfach zu realisierenden Aufbau aufweist und regeneriert werden kann.

Eine erfindungsgemäße Luftfilterpatrone weist die Merkmale des unabhängigen Anspruchs 1 auf.

Vorteilhafte Ausführungsformen und Weiterbildungen der Erfindung sind in den abhängigen Ansprüchen angegeben.

Die gattungsgemäße Luftfilterpatrone wird erfindungsgemäß dadurch weiterentwickelt, dass der Koaleszenzfilter in der axialen Erstreckungsrichtung vor dem Trockenmittel in einer Einströmfläche des Trockenmittelbehälters angeordnet ist. Auf diese Weise kann der mechanische Aufbau der Luftfilterpatrone einfach gestaltet werden, so dass auch die Fertigung der Luftfilterpatrone einfach zu realisieren ist. Durch das Anordnen des Koaleszenzfilters in der axialen Erstreckungsrichtung vor dem Trockenmittel kann darüber hinaus die Regenerationsfähigkeit der Luftfilterpatrone weiterhin gewährleistet werden. Als Einströmfläche des Trockenmittelbehälters wird in der vorliegenden Beschreibung insbesondere die zu der axialen Erstreckungsrichtung des Trockenmittelbehälters senkrechte Schnittfläche bezeichnet, durch die die aufzubereitende Druckluft während der Druckluftaufbereitung in den Trockenmittelbehälter eintritt.

Im Zusammenhang mit der beschriebenen Luftfilterpatrone ist erfindungsgemäß vorgesehen, dass ein Deckelelement vorgesehen ist, das das Trockenmittel in dem Trockenmittelbehälter fixiert. Das Deckelelement kann das Trockenmittel in dem Trockenmittelbehälter festhalten, so dass durch etwaige Erschütterungen der Verbleib des Trockenmittels in dem Trockenmittelbehälter gesichert ist.

Weiterhin ist vorgesehen, dass der Koaleszenzfilter zwischen dem Deckelelement und dem Trockenmittel angeordnet ist. Durch das Anordnen des Koaleszenzfilters zwischen dem Deckelelement und dem Trockenmittel ist der Koaleszenzfilter in einfacher Weise in der Einströmfläche des Trockenmittelbehälters fixierbar, ohne dass zusätzliche Halteeinrichtungen zur Fixierung des Koaleszenzfilters in der Einströmfläche notwendig sind. Während des Herstellungsprozesses der Luftfilterpatrone kann der Koaleszenzfilter beispielsweise in einfacher Weise auf das Trockenmittel aufgelegt werden, nachdem der Trockenmittelbehälter mit dem Trockenmittel befüllt wurde. Anschließend kann der Trockenmittelbehälter in üblicher Weise durch das Deckelelement verschlossen werden.

Erfindungsgemäß ist vorgesehen, dass ein zur Abschaltung gröberer Feststoffpartikel ausgelegter Grobfilter vorgesehen ist, durch den die durch einen Eingangsanschluss in die Luftfilterpatrone eintretende aufzubereitende Druckluft zunächst strömt. Auf diese Weise wird der auf dem Trockenmittel liegende Koaleszenzfilter vor Verschmutzung und Beschädigung durch grobe Feststoffpartikel geschützt.

In nicht beanspruchter Weise kann alternativ auch vorgesehen sein, dass der Koaleszenzfilter in der axialen Erstreckungsrichtung vor dem Deckelelement angeordnet ist. Auch dies stellt eine einfache Möglichkeit zur Anbringung des Koalszenzfilters dar, welches in diesem Fall nach dem Anbringen des Deckelelementes an dem Trockenmittelbehälter beispielsweise in einfacher Weise auf das Deckelelement aufgelegt sein kann.

Vorteilhafterweise kann vorgesehen sein, dass der Koaleszenzfilter an dem Deckelelement fixiert ist. Das kann ein unbeabsichtigtes Freigeben der Einströmfläche verhindern, so dass sichergestellt ist, dass nur Druckluft in den Trockenmittelbehälter einströmen kann, die zuvor durch der Koaleszenzfilter geströmt ist. Freigeben bedeutet in diesem Zusammenhang, dass nicht die gesamte Einströmfläche von dem Koaleszenzfilter bedeckt ist. Weiterhin kann auf diese Weise die Montage der Luftfilterpatrone vereinfacht werden, da der Koaleszenzfilter an dem Deckelelement vormontiert werden kann.

Es kann auch vorgesehen sein, dass das Deckelelement in der axialen Erstreckungsrichtung gegenüber dem Trockenmittelbehälter beweglich angeordnet und durch ein Federelement vorgespannt ist. Das in dem Trockenmittelbehälter vorhandene Trockenmittel liegt üblicherweise in Form eines Granulats vor. Die einzelnen Granulatkörner des Trockenmittels können sich bei entsprechendem Freiraum durch Erschütterungen relativ zueinander bewegen. Dabei stoßen die Granulatkörner wiederholt miteinander zusammen, wodurch einzelne Granulatkörner im Laufe der Zeit zerbrechen. Die Bruchstücke können dann in zuvor freie Zwischenräume des Granulats eintreten. Dies kann zu einer Verdichtung des Trockenmittels und damit zu einer Veränderung des Strömungswiderstandes der Luftfilterpatrone führen, wodurch beispielsweise die Trocknungseigenschaften der Luftfilterpatrone verändert werden können. Weiterhin können die Bruchstücke der Granulatkörner selbst als Schmutzteilchen von der aufzubereitenden Druckluft mitgerissen werden und im Falle einer Eintragung in die mit Druckluft versorgten Systeme des Fahrzeugs deren Funktionsfähigkeit beeinträchtigen. Die in der axialen Erstreckungsrichtung des Trockenmittelbehälters bewegliche und vorgespannte Anordnung des Deckelelementes ermöglicht eine Minimierung der Beweglichkeit der Granulatkörner innerhalb des Trockenmittelbehälters, so dass weniger Granulatkörner durch Erschütterungen zertrümmert werden.

Vorteilhafterweise kann vorgesehen sein, dass das Federelement an dem Trockenmittelbehälter oder einem den Trockenmittelbehälter aufnehmenden Gehäuse der Luftfilterpatrone fixiert ist. Durch das Fixieren des Federelementes an dem Trockenmittelbehälter oder einem den Trockenmittelbehälter aufnehmenden Gehäuse kann der Zusammenbau der Luftfilterpatrone vereinfacht werden.

Weiterhin kann vorgesehen sein, dass ein Luftfilter in einer Ausströmfläche des Trockenmittelbehälters angeordnet ist. Durch das Luftfilter in der Ausströmfläche können Verschmutzungen in dem Trockenmittelbehälter zurückgehalten werden, die beispielsweise bei einer Zertrümmerung einzelner Granulatkörner des Trockenmittels innerhalb des Trockenmittelbehälters entstehen.

Die vorliegende Erfindung wird im Folgenden anhand einer beispielhaften Ausführungsform ausgehend vom bekannten Stand der Technik beispielhaft beschrieben.

Es zeigen:
- Figur 1: eine erste Ausführungsform einer Luftfilterpatrone aus dem Stand der Technik;
- Figur 2: eine zweite Ausführungsform einer Luftfilterpatrone aus dem Stand der Technik;
- Figur 3: eine schematische Darstellung eines Nutzfahrzeugs; und
- Figur 4: eine dritte Ausführungsform einer Luftfilterpatrone.

In den folgenden Zeichnungen bezeichnen gleiche Bezugszeichen gleiche oder gleichartige Teile.

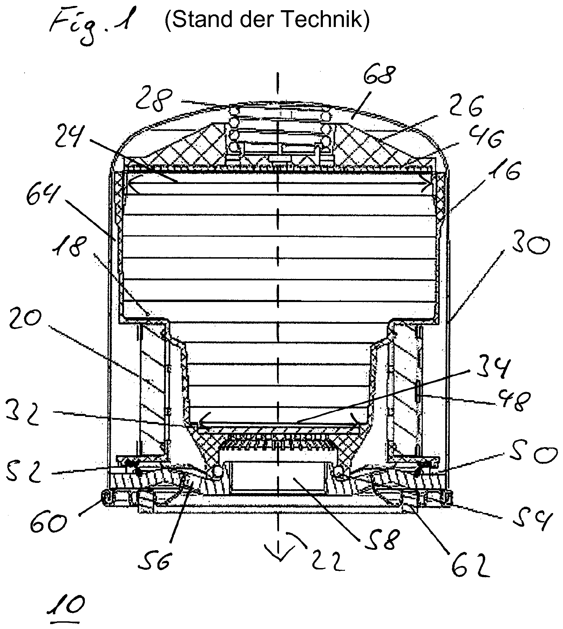

Figur 1 zeigt eine erste Luftfilterpatrone aus dem Stand der Technik. Die dargestellte Luftfilterpatrone 10 umfasst einen Trockenmittelbehälter 16, der im Inneren eines topfartigen Gehäuses 30 angeordnet ist. Im Inneren des Trockenmittelbehälters 16 ist ein Trockenmittel 18 angeordnet, welches während einer Druckluftaufbereitung in einer axialen Erstreckungsrichtung 22 des Trockenmittelbehälters 16 von der aufzubereitenden Druckluft durchströmt wird. Das in dem Trockenmittelbehälter 16 vorhandene Trockenmittel 18 wird durch ein Deckelelement 26 im Inneren des Trockenmittelbehälters 16 fixiert. Das Deckelelement 26 ist über ein Federelement 28, das sich an dem Gehäuse 30 abstützt, in der axialen Erstreckungsrichtung 22 vorgespannt und gegenüber dem Trockenmittelbehälter 16 beweglich. Auf diese Weise kann das Deckelelement 26 durch das Federelement 28 in der axialen Erstreckungsrichtung 22 in den Trockenmittelbehälter 16 geschoben werden, um das Trockenmittel 18 im Inneren des Trockenmittelbehälters 16 zu fixieren. Das Gehäuse 30 der Luftfilterpatrone 10 wird durch eine Bodenplatte 50 verschlossen, die mit Hilfe einer Bördelnaht 60 an dem Gehäuse 30 befestigt ist. Die Bodenplatte 50 weist einen Eingangsanschluss 56 und einen Ausgangsanschluss 58 auf, über die die Druckluft in die Luftfilterpatrone 10 ein- und austreten kann. Ausgehend von dem Eingangsanschluss 56 strömt die aufzubereitende Druckluft entgegen der axialen Erstreckungsrichtung 22 zunächst durch einen Koaleszenzfilter 20, das außen um den Trockenmittelbehälter 16 gewickelt und mit Hilfe einer Manschette 48 fixiert ist. Durch den Koaleszenzfilter 20 werden in der Druckluft vorhandene Schmutz- und Ölpartikel zurückgehalten, die beispielsweise in fester oder flüssiger Form vorliegen können. Nach dem Durchtritt durch den Koaleszenzfilter 20 strömt die aufzubereitende Druckluft entgegen der axialen Erstreckungsrichtung 22 in einem Zwischenraum 64 zwischen dem Gehäuse 30 und dem Trockenmittelbehälter 16 bis zu einem Umlenkraum 68, um von dort über eine Einströmfläche 24 in den Trockenmittelbehälter 16 mit dem Trockenmittel 18 einzutreten. Als Einströmfläche 24 des Trockenmittelbehälters 16 kann insbesondere die Querschnittsfläche des Trockenmittelbehälters 16 senkrecht zu der axialen Erstreckungsrichtung 22 angesehen werden, durch die aufzubereitende Druckluft in das mit dem Trockenmittel 18 gefüllte Innere des Trockenmittelbehälters 16 eintritt. Ein weiteres Luftfilter 46 kann in der Einströmfläche 24 angeordnet sein. Das Trockenmittel 18 wird in der axialen Erstreckungsrichtung 22 von der aufzubereitenden Druckluft durchströmt, wobei in der Druckluft enthaltene Feuchtigkeit zurückgehalten wird. Die zurückgehaltene Feuchtigkeit kann beispielsweise in Form von flüssigem Wasser in das Trockenmittel 18 eingelagert werden. Die aufbereitete Druckluft tritt über eine Ausströmfläche 34, an der ein Luftfilter 32 angeordnet ist, aus dem mit Trockenmittel 18 gefüllten Trockenmittelbehälter 16 aus und strömt in der axialen Erstreckungsrichtung 22 weiter, um über den Ausgangsanschluss 58 aus der Luftfilterpatrone 10 auszutreten. Das Luftfilter 32 hält in dem Trockenmittelbehälter 16 vorhandene Schmutzpartikel zurück, die beispielsweise durch mechanische Alterungsprozesse des Trockenmittels 18 entstehen können. Die Ausströmfläche 34 kann insbesondere die Querschnittsfläche senkrecht zu der axialen Erstreckungsrichtung 22 sein, durch die Druckluft aus dem mit Trockenmittel 18 gefüllten Inneren des Trockenmittelbehälters 16 austritt. Der Eingangsanschluss 56 ist gegenüber dem Ausgangsanschluss 58 über einen Dichtring 54 abgedichtet, so dass Druckluft nicht unter Umgehung des Koaleszenzfilters 20 und des Trockenmittels 18 von dem Eingangsanschluss 56 zu dem Ausgangsanschluss 58 strömen kann. Die Luftfilterpatrone 10 ist im montierten Zustand nach außen über einen weiteren Dichtring 62 abgedichtet.

Die in Figur 1 dargestellte Luftfilterpatrone 10 kann unter Umkehrung der Strömungsrichtung regeneriert werden, wobei bereits gereinigte und getrocknete Druckluft in dem Trockenmittel 18 gespeichertes Wasser aufnimmt und über ein Rückschlagventil 52 unter Umgehung des Koaleszenzfilters 20 über den Eingangsanschluss 56 aus der Luftfilterpatrone 10 austreten kann. Dabei werden auch an dem Koaleszenzfilter 20 abgeschiedene Schmutzpartikel, die sich ebenfalls im Bereich des Rückschlagventils 52 sammeln, aus der Luftfilterpatrone 10 ausgetragen.

Zur Herstellung der in Figur 1 dargestellten Luftfilterpatrone 10 wird der Koaleszenzfilter 20 auf den Trockenmittelbehälter 16 gewickelt und mit der Manschette 48 fixiert. Das Rückschlagventil 52 und der Dichtring 54 werden anschließend an der Unterseite des Trockenmittelbehälters 16 montiert. Danach wird das Luftfilter 32 in den Trockenmittelbehälter 16 gelegt. Der Trockenmittelbehälter 16 wird mit dem Trockenmittel 18 gefüllt und mit dem weiteren Luftfilter 46 abgedeckt. Das Deckelelement 26 wird danach von oben in den Trockenmittelbehälter 16 eingeführt, damit das Trockenmittel 18 nicht herausrieseln kann. Um Relativbewegungen des Trockenmittels 18 zu verhindern, wird das Deckelelement 26 durch das Federelement 28, das beispielsweise als eine Druckfeder ausgebildet sein kann, gegen das Trockenmittel 18 gepresst. Das Federelement 28 wird an dem Gehäuse abgestützt. Die gesamte Baugruppe wird anschließend auf die Bodenplatte 50 gesetzt und mit dieser verpresst. Die Bodenplatte 50 und das Gehäuse werden zusätzlich noch durch die Bördelnaht 60 miteinander verbunden.

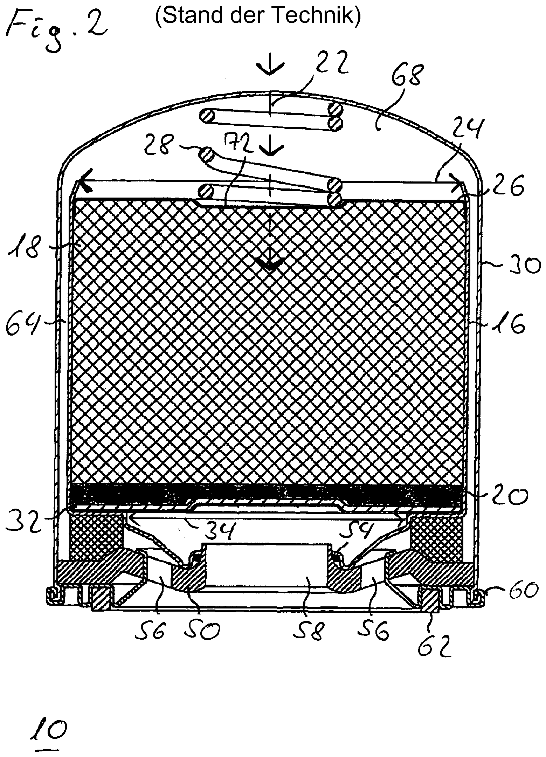

Figur 2 zeigt eine zweite Ausführungsform einer Luftfilterpatrone aus dem Stand der Technik. Im Unterschied zu der aus der Figur 1 bekannten Ausführungsform der Luftfilterpatrone 10 ist bei der Ausführungsform gemäß Figur 2 der Koaleszenzfilter 20 in der axialen Erstreckungsrichtung 22 nach dem in dem Trockenmittelbehälter 16 vorhandenen Trockenmittel 18 angeordnet, so dass während der Druckluftaufbereitung das Trockenmittel 18 durchströmt wird, bevor der Koaleszenzfilter 20 durchströmt wird. Weiterhin ist bei der Ausführungsform gemäß Figur 2 eine Vertiefung 72 des Deckelelementes 26 vorgesehen, welche das Federelement 28 im montierten Zustand senkrecht zu der axialen Erstreckungsrichtung 22 in einer definierten Lage hält.

Aufgrund der Anordnung des Koaleszenzfilters 20 in der axialen Erstreckungsrichtung 22 hinter dem Trockenmittel 18 werden auch bei der in Figur 2 dargestellten Ausführungsform der Luftfilterpatrone 10 Schmutz- und Ölpartikel zurückgehalten sowie die Druckluft getrocknet.

Da der Koaleszenzfilter 20 jedoch in der axialen Erstreckungsrichtung 22 hinter dem Trockenmittel 18 angeordnet ist, kann bei der in Figur 2 dargestellten Luftfilterpatrone 10 das Trockenmittel 18 mit Schmutz- und Ölpartikeln verunreinigt werden. Diese Verunreinigungen können die Funktionsfähigkeit und die Regenerationsfähigkeit des Trockenmittels 18 auf lange Sicht negativ beeinflussen, so dass die in Figur 2 dargestellte Luftfilterpatrone 10 nur beschränkt regenerationsfähig ist.

Zur Herstellung wird der Koaleszenzfilter 20, das beispielsweise als ein Filterpaket ausgebildet sein kann, in den Trockenmittelbehälter 16 gelegt. Der Trockenmittelbehälter 16 wird anschließend mit dem Trockenmittel 18 befüllt und mit dem Deckelelement 26 abgedeckt, damit kein Trockenmittel 18 herausrieseln kann. Um Relativbewegungen des Trockenmittels 18 zu verhindern, wird das Deckelelement 26 durch das Federelement 28, das sich an dem Gehäuse 30 abstützt, gegen das Trockenmittel 18 gepresst. Das Federelement 28 kann beispielsweise als Druckfeder ausgeführt sein. Die gesamte Baugruppe wird dann auf die Bodenplatte 50 gesetzt und mit dieser verpresst. Zusätzlich wird die Bodenplatte 50 über die Bördelnaht 60 mit dem Gehäuse 30 verbunden.

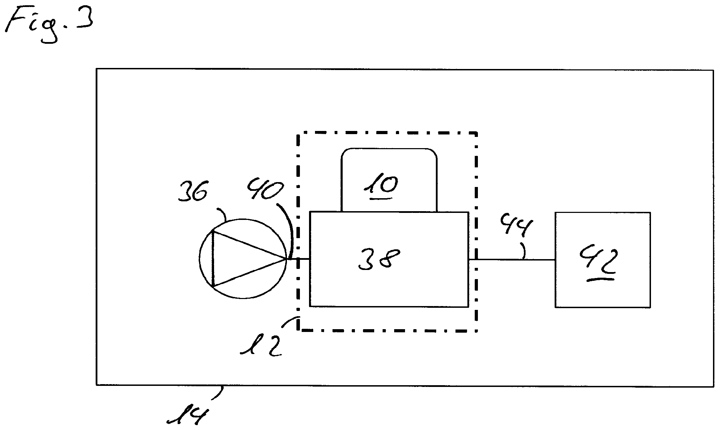

Figur 3 zeigt eine schematische Darstellung eines Nutzfahrzeugs. Das dargestellte Nutzfahrzeug 14 umfasst einen Druckluftverbraucher 42, der beispielsweise eine druckluftbetriebene Bremse des Nutzfahrzeugs sein kann. Zur Druckluftversorgung des Druckluftverbrauchers 42 ist ein Kompressor 36 in dem Nutzfahrzeug 14 vorgesehen, der Druckluft über eine Druckluftförderleitung 40 zu einer Druckluftaufbereitungsanlage 12 fördert, die insbesondere einen Lufttrockner 38 und eine an dem Lufttrockner 38 montierte Luftfilterpatrone 10 umfasst. Die der Druckluftaufbereitungsanlage 12 über die Druckluftförderleitung 40 zugeführte Druckluft wird insbesondere in der Luftfilterpatrone 10 gereinigt und getrocknet und anschließend über eine Druckluftleitung 44 an den Druckluftverbraucher 42 weitergeleitet. Die Fixierung der Luftfilterpatrone 10 an dem Lufttrockner 38 kann beispielsweise mit Hilfe eines Schraubgewindes oder mit Hilfe eines Bajonettverschlusses erfolgen, wobei zusätzliche Sicherungselemente vorgesehen sein können, um ein selbsttätiges Lösen der Luftfilterpatrone 10 von dem Lufttrockner 38 zu verhindern.

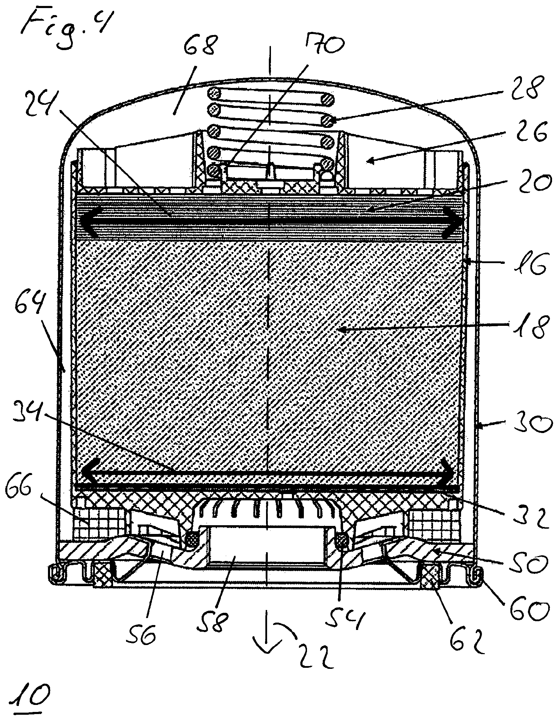

Figur 4 zeigt eine dritte Ausführungsform einer Luftfilterpatrone. Der Koaleszenzfilter 20 ist bei der in Figur 4 dargestellten Ausführungsform der Luftfilterpatrone 10 in der Einströmfläche 24 des Trockenmittelbehälters 16 angeordnet, so dass der Koaleszenzfilter 20 in der axialen Erstreckungsrichtung 22 des Trockenmittelbehälters 16 vor dem in dem Trockenmittelbehälter 16 angeordneten Trockenmittel 18 angeordnet ist. Der Koaleszenzfilter 20 liegt direkt auf dem Trockenmittel 18 auf. Dementsprechend liegt der Koaleszenzfilter 20 zwischen dem Deckelelement 26 und dem Trockenmittel 18. Alternativ könnte der Koaleszenzfilter 20 auch oberhalb des Deckelelementes 26 angeordnet sein, so dass das Deckelelement 26 direkt an das Trockenmittel 18 angrenzt, um eine Kompression des Koaleszenzfilters 20 in der axialen Erstreckungsrichtung 22 durch das Deckelelement 26 und das Federelement 28 zu verhindern. Eine solche Kompression des Koaleszenzfilters 20 könnte die Filterwirkung des Koaleszenzfilters 20 reduzieren. Weiterhin ist denkbar, dass das Deckelelement 26 eine nicht dargestellte Halteeinrichtung aufweist, die der Koaleszenzfilter 20 aufnehmen kann, um auf diese Weise eine Kompression des Koaleszenzfilters 20 in der axialen Erstreckungsrichtung 22 zu verhindern. Beispielsweise könnte das Deckelelement 26 in der axialen Erstreckungsrichtung 22 ober- und unterhalb des Koaleszenzfilters 20 luftdurchlässige Gitterstrukturen aufweisen, die in der axialen Erstreckungsrichtung 22 einen festen Abstand zueinander haben, so dass der Koaleszenzfilter 20 zwischen den beiden Gitterstrukturen des Deckelelementes 26 in der axialen Erstreckungsrichtung 22 druckfrei sicher gelagert sein kann.

Das Deckelelement 26 weist weiterhin Haltenippel 70 auf, die zur Vormontage des Federelementes 28, das beispielsweise als Druckfeder ausgeführt sein kann, dienen. Dies kann die Montage der in Figur 4 dargestellten Luftfilterpatrone 10 erleichtern. Darüber hinaus ist ein Grobfilter 66 vorgesehen, durch den die durch den Eingangsanschluss eintretende aufzubereitende Druckluft nach dem Eintritt in die Luftfilterpatrone 10 zunächst strömt. Das Grobfilter 66 kann insbesondere zur Abscheidung gröberer Feststoffpartikel ausgelegt sein. Ausgehend von dem Grobfilter 66 steigt die Druckluft in dem Zwischenraum 64 bis zu dem Umlenkraum 68, um dort über den in der Einströmfläche 24 angeordnete Koaleszenzfilter 20 in der axialen Erstreckungsrichtung 22 in den Trockenmittelbehälter 16 einzutreten, um in der axialen Erstreckungsrichtung 22 durch das in dem Trockenmittelbehälter 16 angeordnete Trockenmittel 18 zu strömen. Die Druckluft verlässt den Trockenmittelbehälter 16 in der axialen Erstreckungsrichtung 22 an der Ausströmfläche 34, an der das Luftfilter 32 angeordnet ist. Von dort strömt die aufbereitete Druckluft über den Ausgangsanschluss 58 aus der Luftfilterpatrone 10 aus. Da der Koaleszenzfilter 20 in der axialen Erstreckungsrichtung 22 vor dem in dem Trockenmittelbehälter 16 angeordneten Trockenmittel 18 liegt, werden die Öl- und Schmutzpartikel aus der Druckluft abgeschieden, bevor diese mit dem Trockenmittel 18 in Berührung kommen. Das Trockenmittel 18 wird dementsprechend nicht mit Öl- und Schmutzpartikeln verunreinigt, so dass seine Trockenleistung und seine Regenerationsfähigkeit auch auf lange Sicht nicht durch derartige Verunreinigungen reduziert werden. In Abhängigkeit von einer Orientierung der dargestellten Luftfilterpatrone 10 im montierten Zustand, das heißt wenn die Luftfilterpatrone 10 an dem Lufttrockner 38 befestigt ist, wie dies in Figur 3 dargestellt ist, wird höchstens die dem Koaleszenzfilter 20 zugewandte Grenzschicht des Trockenmittels 18 mit Öl- und Schmutzpartikeln verunreinigt. Die in Figur 4 dargestellte Luftfilterpatrone ist dementsprechend gut regenerierbar.

Die Montage, das heißt der Zusammenbau, der in Figur 4 dargestellten Luftfilterpatrone 10 ist sehr einfach realisierbar. Zunächst können an dem leeren Trockenmittelbehälter 16 der Dichtring 54 und das Grobfilter 66 fixiert werden. Anschließend kann das Luftfilter 32 in dem Trockenmittelbehälter 16 gelegt werden, der danach mit dem Trockenmittel 18 befüllt wird. Der Koaleszenzfilter 20 kann nach dem Befüllen in einfacher Weise auf das Trockenmittel 18 gelegt werden. Auf den Koaleszenzfilter 20 kann das Deckelelement 26 gesetzt werden, an dem bereits das Federelement 28 über die Haltenippel 70 vorfixiert ist. Über die gesamte Baugruppe kann anschließend das topfartige Gehäuse 30 gestülpt werden, bevor die derart teilmontierte Luftfilterpatrone 10 gewendet wird, so dass die Bodenplatte 50 auf der offenen Seite des Gehäuses 30 auf die Luftfilterpatrone 10 aufgelegt werden kann. Die Bodenplatte 50 wird mit der übrigen Baugruppe verpresst. Als letzter Montageschritt kann die Bodenplatte 50 zusätzlich mit Hilfe der Bördelnaht 60 mit dem Gehäuse 30 verbunden werden und der weitere Dichtring 62 an der Bodenplatte 50 montiert werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Luftfilterpatrone
- 12: Druckluftaufbereitungsanlage
- 14: Nutzfahrzeug
- 16: Trockenmittelbehälter
- 18: Trockenmittel
- 20: Koaleszenzfilter
- 22: axiale Erstreckungsrichtung
- 24: Einströmfläche
- 26: Deckelelement
- 28: Federelement
- 30: Gehäuse
- 32: Luftfilter
- 34: Ausströmfläche
- 36: Kompressor
- 38: Lufttrockner
- 40: Druckluftförderleitung
- 42: Druckluftverbraucher
- 44: Druckluftleitung
- 46: weiterer Luftfilter
- 48: Manschette
- 50: Bodenplatte
- 52: Rückschlagventil
- 54: Dichtring
- 56: Eingangsanschluss
- 58: Ausgangsanschluss
- 60: Bördelnaht
- 62: weiterer Dichtring
- 64: Zwischenraum
- 66: Grobfilter
- 68: Umlenkraum
- 70: Haltenippel
- 72: Vertiefung

## Patentansprüche

1. Luftfilterpatrone (10) zur Druckluftaufbereitung für eine Druckluftaufbereitungsanlage (12), insbesondere eine Druckluftaufbereitungsanlage (12) eines Nutzfahrzeugs (14), umfassend
- einen mit einem Trockenmittel (18) gefüllten Trockenmittelbehälter (16), und
- einen Koaleszenzfilter (20),
- wobei das Trockenmittel (18) während der Druckluftaufbereitung in einer axialen Erstreckungsrichtung (22) des Trockenmittelbehälters (16) durchströmt wird,
- wobei der Koaleszenzfilter (20) in der axialen Erstreckungsrichtung (22) vor dem Trockenmittel (18) in einer Einströmfläche (24) des Trockenmittelbehälters (16) angeordnet ist,
- wobei ein Deckelelement (26) vorgesehen ist, das das Trockenmittel (18) in dem Trockenmittelbehälter (16) fixiert,
- wobei der Koaleszenzfilter (20) direkt auf dem Trockenmittel (18) liegt, so dass der Koaleszenzfilter (20) zwischen dem Deckelelement (26) und dem Trockenmittel (18) angeordnet ist,
**dadurch gekennzeichnet, dass** ein zur Abscheidung gröberer Feststoffpartikel ausgelegtes Grobfilter (66) vorgesehen ist, durch den die durch einen Eingangsanschluss (56) in die Luftfilterpatrone (10) eintretende aufzubereitende Druckluft zunächst strömt und dass ein Federelement (28) an dem Trockenmittelbehälter (16) oder einem den Trockenmittelbehälter (16) aufnehmenden Gehäuse (30) der Luftfilterpatrone (10) fixiert ist, wobei der Koaleszenzfilter (20) an dem Deckelement (26) fixiert ist, wobei das Deckelelement (26) Haltenippel (70) aufweist, mittels derer das Federelement (28) fixiert ist.

2. Luftfilterpatrone (10) nach Anspruch 1, **dadurch gekennzeichnet, dass** das Deckelelement (26) in der axialen Erstreckungsrichtung (22) gegenüber dem Trockenmittelbehälter (16) beweglich angeordnet und durch das Federelement (28) vorgespannt ist.

3. Luftfilterpatrone (10) nach Anspruch 1 oder 2, **dadurch gekennzeichnet,** dassein Luftfilter (32) in einer Ausströmfläche (34) des Trockenmittelbehälters (16) angeordnet ist.

## Claims

1. An air filter cartridge (10) for the treatment of compressed air for a compressed-air treatment system (12), in particular a compressed-air treatment system (12) of a utility vehicle (14), comprising
- a drying agent container (16) filled with a drying agent (18), and
- a coalescence filter (20),
- the compressed air flowing through the drying agent (18) in an axial direction of extension of the drying agent container (16) during the compressed-air treatment,
- the coalescence filter (20) being arranged in an inflow surface (24) of the drying agent container (16) upstream of the drying agent (18) in the axial direction of extension (22),
- a cover element (26) being provided that fixes the drying agent (24) in the drying agent container (16),
- the coalescence filter (20) sitting directly on the drying agent (18) such that the coalescence filter (20) is arranged between the cover element (26) and the drying agent (18)
**characterised in that** a coarse filter (66) designed to separate coarser solid-matter particles is provided, that the compressed air to be treated, which enters the air filter cartridge (10) through an inlet port (56), initially flows through this coarse filter and that a spring element (28) is fixed to the drying agent container (16) or to an air filter cartridge housing (30) that accommodates the drying agent container (16), the coalescence filter (20) being fixed to the cover element (26) and the cover element (26) having retaining nipples (70) by means of which the spring element (28) is fixed.

2. An air filter cartridge (10) according to claim 1, **characterised in that** the cover element (26) is arranged so as that it is able to move relative to the drying agent container (16) in the axial direction of extension (22) and is preloaded by the spring element (28).

3. An air filter cartridge (10) according to claim 1 or 2, **characterised in that** an air filter (32) is arranged in an outflow surface (34) of the drying agent container (16).

## Revendications

1. Cartouche (10) de filtre à air pour le traitement de l'air comprimé d'un système (12) de traitement d'air comprimé, notamment d'un système (12) de traitement d'air comprimé d'un véhicule (14) utilitaire, comprenant
- un récipient (16) d'agent dessiccateur empli d'un agent (18) dessiccateur, et
- un filtre (20) à coalescence,
- dans lequel l'agent (18) dessiccateur est, pendant le traitement de l'air comprimé, traversé dans une direction (22) d'étendue axiale du récipient (16) d'agent dessiccateur,
- dans lequel le filtre (20) à coalescence est disposé, dans la direction (22) d'étendue axiale, avant l'agent (18) dessiccateur, dans une surface (24) d'entrée du récipient (16) d'agent dessiccateur,
- dans lequel il est prévu un élément (26) de recouvrement, qui immobilise l'agent (18) dessiccateur dans le récipient (16) d'agent dessiccateur,
- dans lequel le filtre (20) à coalescence s'applique directement à l'agent (18) dessiccateur, de manière à ce que le filtre (20) à coalescence soit disposé entre l'élément (26) de recouvrement et l'agent (18) dessiccateur,
**caractérisée en ce qu'**il est prévu un filtre (66) grossier, qui est conçu pour la séparation de particules de matière solide assez grossières et par lequel passe d'abord l'air comprimé à traiter pénétrant dans la cartouche (10) de filtre à air par un raccord (56) d'entrée et **en ce qu'**un élément (28) de ressort est immobilisé sur le récipient (16) d'agent dessiccateur ou sur un boîtier (30), recevant le récipient (18) d'agent dessiccateur, de la cartouche (10) du filtre à air, le filtre (20) à coalescence étant immobilisé sur l'élément (26) de recouvrement, l'élément (26) de recouvrement ayant des mamelons (70) de maintien, au moyen desquels l'élément (28) de ressort est immobilisé.

2. Cartouche (10) de filtre à air suivant la revendication 1, **caractérisée en ce que** l'élément (26) de recouvrement est monté mobile dans la direction (22) d'étendue axiale par rapport au récipient (16) d'agent dessiccateur et est précontraint par l'élément (28) de ressort.

3. Cartouche (10) de filtre à air suivant la revendication 1 ou 2, **caractérisée en ce qu'**un filtre (32) à air est mis dans une surface (34) de sortie du récipient (16) d'agent dessiccateur.
